(19) **Europäisches Patentamt European Patent Office Office européen des brevets**

(11) **EP 1 697 913 B1**

(12) **FASCICULE DE BREVET EUROPEEN**

(45) Date de publication et mention
de la délivrance du brevet:
**03.06.2009 Bulletin 2009/23**

(51) Int Cl.:
***G09B 21/00*** *(2006.01)* ***G09B 19/04*** *(2006.01)*

(21) Numéro de dépôt: **04817588.9**

(86) Numéro de dépôt international:
**PCT/FR2004/003365**

(22) Date de dépôt: **23.12.2004**

(87) Numéro de publication internationale:
**WO 2005/064570 (14.07.2005 Gazette 2005/28)**

(54) **DISPOSITIF DE TRAITEMENT DE SIGNAUX AUDIO, NOTAMMENT POUR LE TRAITEMENT DES TROUBLES AUDIOPHONATOIRES**

EINRICHTUNG ZUM BEHANDELN VON AUDIOSIGNALEN INSBESONDERE ZUR BEHANDLUNG VON AUDIOPHONATORISCHEN KRANKHEITEN

DEVICE FOR TREATING AUDIO SIGNALS, ESPECIALLY FOR TREATING AUDIOPHONATORY DISORDERS

(84) Etats contractants désignés:
**AT BE BG CH CY CZ DE DK EE ES FI FR GB GR HU IE IS IT LI LT LU MC NL PL PT RO SE SI SK TR**

(30) Priorité: **24.12.2003 FR 0315379**

(43) Date de publication de la demande:
**06.09.2006 Bulletin 2006/36**

(73) Titulaire: **Beller, Isi**
**F-75006 Paris (FR)**

(72) Inventeurs:
• **BELLER, Isi**
**F-75006 Paris (FR)**
• **VIALA, Christophe**
**F-83110 Sanary sur Mer (FR)**

(74) Mandataire: **Plaçais, Jean Yves**
**Cabinet Netter,**
**36, avenue Hoche**
**75008 Paris (FR)**

(56) Documents cités:
**US-A- 5 573 403 US-B1- 6 629 844**

• **APOUX F ET AL: "TEMPORAL ENVELOPE EXPANSION OF SPEECH IN NOISE FOR NORMAL-HEARING AND HEARING-IMPAIRED LISTENERS: EFFECTS ON IDENTIFICATION PERFORMANCE AND RESPONSE TIMES" HEARING RESEARCH, ELSEVIER SCIENCE PUBLISHERS, AMSTERDAM, NL, vol. 153, no. 1/2, mars 2001 (2001-03), pages 123-131, XP001159150 ISSN: 0378-5955**

## Description

L'invention concerne les aides au traitement des troubles audiophonatoires et auditivo-verbaux présentés par certains sujets, le plus souvent de jeunes enfants.

Des dispositifs pour le traitement par voie auditive de sujets atteints de troubles audiophonatoires sont déjà connus. En particulier, FR-A-2 686 442 propose une installation propre à élaborer, à partir d'un signal audiofréquence d'entrée, un signal paramétrique dont l'amplitude et/ou la fréquence varient en fonction du logarithme de la fréquence et/ou de l'amplitude du signal d'entrée. L'élaboration du signal paramétrique se fait en analogique.

Différents facteurs, dont le coût des appareils, leur encombrement, et leur commodité d'emploi, font qu'il est souhaitable d'effectuer le traitement sous forme numérique. Cela permettrait notamment d'utiliser des fichiers contenus dans un disque dur, au lieu des cassettes magnétiques et des disques compacts de l'art antérieur. Cependant, le passage en numérique s'est heurté à des difficultés considérables : non-linéarité du traitement et difficulté de corriger certains effets indus de l'échantillonnage et de la numérisation.

La présenté invention vient permettre d'avancer dans cette voie.

Pour ce faire, l'invention telle que définie dans la revendication 1 prévoit un dispositif comprenant une entrée de signal audiofréquence analogique, suivie d'un codeur analogique-numérique, puis d'un détecteur d'enveloppe, d'un limiteur numérique, d'un multiplieur, d'un synthétiseur, et enfin d'un convertisseur numérique-analogique, tels que

- le codeur analogique-numérique est agencé pour refléter le signal audiofréquence analogique d'entrée par une première suite de valeurs numériques,

- le détecteur d'enveloppe est agencé pour établir à partir de la première suite de valeurs numériques une seconde suite de valeurs numériques reflétant l'enveloppe du signal audiofréquence d'entrée,

- le limiteur numérique est agencé pour établir une troisième suite de valeurs numériques, bornées, à partir de la seconde suite de valeurs numériques,

- le multiplieur est agencé pour établir une suite de valeurs de fréquences d'émission modulées selon les valeurs de la troisième suite de valeurs numériques,

- le synthétiseur est agencé pour élaborer un signal audio numérique à partir de la suite de valeurs de fréquences d'émission, et

- le convertisseur numérique-analogique est agencé pour produire un signal analogique de sortie à partir du signal audio numérique.

Le dispositif selon l'invention permet ainsi d'obtenir un signal analogique de sortie dont la fréquence est modulée en fonction du signal audiofréquence analogique d'entrée et dont l'élaboration se fait en numérique.

D'autres caractéristiques et avantages de l'invention apparaîtront à l'examen de la description détaillée ci-après, ainsi que des dessins annexés, sur lesquels :

- la figure 1 est un schéma présentant un appareil d'aide au traitement des troubles audiophonatoires de l'art antérieur, et

- la figure 2 est un schéma fonctionnel du dispositif de traitement selon l'invention.

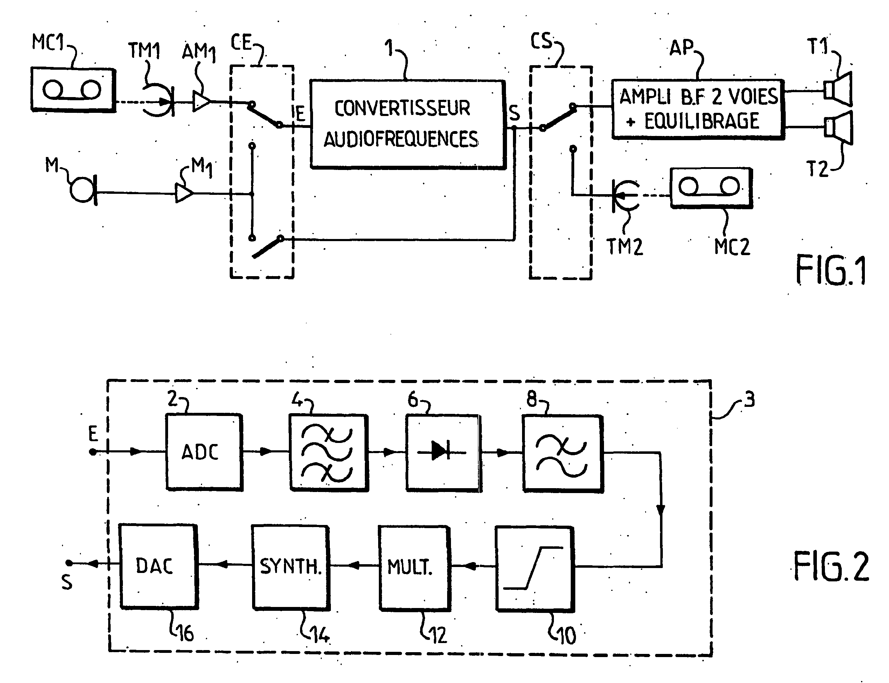

L'annexe 1 présente les lois mathématiques utilisées dans le dispositif de la figure 2.

Les dessins et l'annexe contiennent, pour l'essentiel, des éléments de caractère certain. Ils pourront donc non seulement servir à compléter l'invention, mais aussi contribuer à sa définition le cas échéant.

La figure 1 illustre le dispositif de traitement de troubles auditivo-verbaux selon FR-A-2 686 442, dans lequel un convertisseur audiofréquence 1 est capable d'élaborer, à partir d'un signal audiofréquence soumis à son entrée E, un signal paramétrique dispensé à sa sortie S dont l'amplitude et/ou la fréquence varient en fonction du logarithme de la fréquence et/ou de l'amplitude du signal d'entrée. L'élaboration du signal paramétrique de sortie se fait en analogique. le document US 5 573 403 décrit un dispositif analogique similaire.

Le convertisseur audiofréquence 1 est monté entre un commutateur d'entrée CE et un commutateur de sortie CS. Le commutateur CE permet de relier l'entrée E du convertisseur soit à la sortie de lecture d'une tête magnétique TM1 d'un magnétophone à cassette MC1, de préférence de haute qualité sonore, soit à la sortie d'un lecteur de disques compacts audio, soit à la sortie d'un microphone M, également de haute qualité. L'une et l'autre sorties peuvent être amplifiées par des préamplificateurs AM1 et M1.

La sortie S du convertisseur audiofréquence peut être appliquée par le commutateur CS soit à une chaîne de reproduction sonore à deux voies A, soit à l'entrée d'enregistrement d'une tête magnétique TM2 d'un magnétophone à cassette MC2, qui peut d'ailleurs être le même que le magnétophone à cassette MC1.

Les commutateurs CE et CS permettent une liaison directe entre le microphone M, l'ampli A, et le magnétophone MC2.

La chaîne de reproduction sonore A comporte des réglages de niveaux individuels et d'équilibrage pour chaque voie, associés à un moyen de mesure précis, et des sorties par des transducteur électro-acoustiques, par exemple des hauts-parleurs T1, T2 destinés respectivement aux oreilles gauche et droite du sujet. Un casque peut également être prévu.

Afin d'obtenir un meilleur traitement du signal audiofréquence d'entrée et de tirer le meilleur parti des supports numériques récents, le dispositif selon l'invention prévoit de remplacer le convertisseur audiofréquence 1 de la figure 1 par le dispositif de traitement 3 représenté sur la figure 2, lequel élabore le signal paramétrique de sortie numériquement.

Pour ce faire, le dispositif de traitement numérique selon l'invention est prévu capable de recevoir à son entrée E un signal audiofréquence analogique d'entrée qui peut être une combinaison de signaux analogiques provenant du sujet à traiter et du thérapeute.

Le signal audiofréquence analogique d'entrée est soumis à l'entrée d'un codeur analogique-numérique 2, lequel détermine à intervalles de temps réguliers (période d'échantillonnage) $\Delta T$, la valeur de l'amplitude $S(i)$ du signal soumis à l'entrée et la code numériquement. Le codeur analogique-numérique 2 produit en sortie une suite de valeurs numériques d'amplitude $S(i)$ qui reflète le signal fourni en entrée, c'est-à-dire le signal audiofréquence analogique d'entrée.

Dans un mode de réalisation préféré, une carte son, disposée dans un ordinateur personnel, fait fonction de codeur analogique-numérique 2. La période d'échantillonnage $\Delta T$ est alors fixée par les caractéristiques techniques de la carte son. Par exemple, une fréquence d'échantillonnage de 48 kilohertz, c'est-à-dire une période d'échantillonnage $\Delta T$ voisine de 0.02 milliseconde, est courante sur les cartes son actuellement disponibles sur le marché.

Dans ce même mode de réalisation, l'entrée E du dispositif selon l'invention est l'une des entrées disponibles sur la carte son, couramment une entrée ligne ou une entrée microphone.

Le suite de valeurs numériques $S(i)$ obtenue à la sortie du codeur analogique-numérique 2 est ensuite soumise à l'entrée d'un filtre passe bande numérique 4 qui bloque les fréquences inférieures à une première fréquence de coupure $FC1$ et les fréquences supérieures à une seconde fréquence de coupure $FC2$. Le filtre passe bande peut être réalisé au moyen de deux filtres de Butterworth disposés en cascade : un filtre passe haut de fréquence de coupure $FC1$ suivi d'un filtre passe bas de fréquence de coupure $FC2$. Dans un mode de réalisation préféré, la première fréquence de coupure $FC1$ est voisine de 230 Hz tandis que la seconde fréquence de coupure $FC2$ est proche de 3200 Hz.

Dans ce mode de réalisation, la fréquence fondamentale moyenne de la voix étant voisine de 120 Hz pour les hommes et de 210 Hz pour les femmes, le filtre passe bande numérique 4 est de bande suffisamment large pour permettre le passage des informations contenues dans le signal audiofréquence d'entrée dans le cas où celui-ci contient du langage. Le milieu de la bande de fréquences définie par le filtre passe bande 4 est bien supérieur à la fréquence estimée d'un signal audiofréquence comprenant du langage. De fait, le filtre passe bande 4 filtre une grande partie des fréquences graves et laisse passer une grande partie des fréquences aiguës.

La suite de valeurs numériques d'amplitude $S(i)$, obtenue en sortie du filtre passe-bande 4, est soumise à l'entrée d'un détecteur d'enveloppe 6, lequel réalise sur la suite de valeurs numériques d'amplitude $S(i)$ un traitement numérique selon la loi A1 de l'annexe. À chaque valeur numérique d'amplitude $S(i)$, le détecteur d'enveloppe 6 associe une valeur numérique d'amplitude d'enveloppe $Se(i)$, comme étant la plus grande valeur d'un groupe formé de la valeur absolue de la valeur numérique d'amplitude $S(i)$ et de la valeur absolue de la valeur numérique d'amplitude d'enveloppe précédente $Se(i-1)$ affectée d'un coefficient $Kd$. La valeur du coefficient $Kd$ est déterminée à l'aide de la formule A2 de l'annexe, laquelle prévoit de prendre le coefficient $Kd$ égal à l'exponentielle de l'opposé du rapport de la période d'échantillonnage $\Delta T$ sur la valeur d'une période de démodulation $Td$ choisie. La valeur de la période de démodulation $Td$ est réglable. À titre d'exemple, la période de démodulation $Td$ peut être prise égale à 0,04 seconde.

La formule A1 de l'annexe est une formule classique d'un détecteur de maximum, modifiée par l'introduction du coefficient $Kd$, dont la fonction est de fixer la bande de fréquences désirée pour le signal d'enveloppe obtenu en sortie du détecteur d'enveloppe 6. La formule A2 de l'annexe, relative au calcul du coefficient $Kd$ permet ainsi de choisir la valeur de la période de démodulation $Td$ en rapport avec la bande de fréquences, dans laquelle on veut contenir la sortie du détecteur d'enveloppe 6.

Un filtre numérique passe bas 8 est appliqué au signal de sortie du détecteur d'enveloppe 6, qui bloque les fréquences supérieures à une troisième fréquence de coupure $FC3$, laquelle est réglable. Dans un mode de réalisation préféré, le filtre numérique passe bas 8 est réalisé au moyen d'un filtre passe bas de Butterworth d'ordre 1 et de fréquence de coupure $FC3$ voisine de 24 Hz.

Le filtre passe bas 8 est destiné à atténuer les modulations rapides du signal fourni à son entrée. Le signal obtenu en sortie du filtre passe bas 8 rend compte d'un effet de traîne nécessaire pour éviter que le signal obtenu en sortie du détecteur d'enveloppe 6 ne soit trop "haché".

La suite de valeurs numériques d'amplitude d'enveloppe filtrées $S\in(i)$, obtenue à la sortie du filtre numérique passe bas 8, est ensuite soumise à l'entrée d'un limiteur 10, lequel fournit en sortie une suite de valeurs numériques de modulation $S1(i)$, bornées, selon la formule A3 de l'annexe. Chaque valeur numérique de modulation $S1(i)$ est calculée comme étant le rapport, élevé à la puissance d'un coefficient $K1$, de la valeur numérique d'amplitude d'enveloppe filtrée $S\in(i)$ sur une valeur d'amplitude seuil s choisie. La valeur d'amplitude seuil s est réglable.

La valeur du coefficient $K1$ est déterminée par la formule A4 de l'annexe comme étant l'opposé du rapport du logarithme d'un rapport d'une fréquence d'émission minimale $F1$ et d'une fréquence d'émission maximale $F0$ choisies, sur le logarithme de la valeur d'amplitude seuil s.

La fréquence d'émission minimale $F1$ est réglable. Avantageusement, elle est choisie très largement supérieure à la fréquence fondamentale du signal audiofréquence analogique d'entrée. Dans un mode de réalisation préféré, la fréquence d'émission minimale $F1$ est choisie voisine de 4000 Hz en considérant que la fréquence fondamentale d'un signal provenant d'une voix humaine est voisine de 210 Hz pour les femmes et de 120 Hz pour les hommes.

La fréquence d'émission maximale $F0$ est réglable. Elle est choisie supérieure à la limite ultrasonique du sujet à traiter, c'est-à-dire supérieure à la plus haute fréquence audible par le sujet. La limite ultrasonique est une donnée qui dépend du sujet. Par exemple, chez le jeune enfant, une limite ultrasonique de 20 kilohertz est courante alors que chez des sujets plus âgés elle peut ne pas dépasser 10 kilohertz.

La valeur de l'amplitude seuil s est choisie toujours supérieure à 0,01, pour des raisons qui seront détaillées plus loin. Dans un mode de réalisation préféré, la valeur de l'amplitude seuil s est choisie voisine de 0,03.

La suite de valeurs numériques de modulation $S1(i)$ est ensuite présentée à l'entrée d'un multiplieur 12, lequel détermine une suite de valeurs de fréquences d'émission modulées $F(i)$ selon la formule A5 de l'annexe. Une valeur numérique de fréquence d'émission modulée $F(i)$ est calculée comme produit de la fréquence d'émission maximale $F0$ et de la valeur numérique de modulation $S1(i)$ correspondante, si ledit produit est inférieur à la fréquence d'émission maximale $F0$.

Sinon la valeur numérique $F(i)$ est fixée égale à la valeur de la fréquence d'émission maximale $F0$. Le multiplieur 12 permet ainsi d'établir une suite de valeurs numériques de fréquences d'émission $F(i)$ modulées selon les valeurs de la suite de valeurs numériques de modulation $S1(i)$ obtenue en sortie du limiteur 10.

Les valeurs numériques de fréquences d'émission $F(i)$ dépendent, selon la formule A5 de l'annexe, des valeurs numériques de modulation $S1(i)$, lesquelles sont fonction des valeurs numériques d'amplitude d'enveloppe filtrées $S\in(i)$ donc fonction des valeurs numériques d'amplitude d'enveloppe $Se(i)$, elles-même reflétant l'amplitude de l'enveloppe du signal audiofréquence analogique d'entrée. Par conséquent, les variations des valeurs numériques de fréquences d'émission $F(i)$ rendent compte des variations d'amplitude de l'enveloppe du signal audiofréquence analogique d'entrée. En particulier, lorsque l'amplitude de l'enveloppe du signal audiofréquence analogique d'entrée est importante, c'est-à-dire pour un fort volume sonore, la valeur numérique de la fréquence d'émission correspondante sera faible. Inversement, plus l'amplitude de l'enveloppe du signal audiofréquence analogique d'entrée est proche de la valeur d'amplitude seuil s, plus la fréquence d'émission modulée $F(i)$ sera importante.

Selon les formules A3, A4 et A5 de l'annexe, le logarithme de la fréquence d'émission modulée $F(i)$ est une fonction linéaire du logarithme de la valeur de l'amplitude de l'enveloppe filtrée $S\in(i)$ correspondante. Or il est connu que l'oreille humaine est sensible aux fréquences et aux amplitudes de manière logarithmique. La perception que le sujet a des fréquences d'émission modulées $F(i)$ rend compte de manière parfaitement équivalente, des variations d'amplitude du signal audiofréquence analogique d'entrée.

Au moyen de la formule A3 de l'annexe, le limiteur 10 détermine des valeurs numériques de modulation $SI(i)$ telles, que les valeurs numériques de fréquences d'émission modulées $F(i)$, obtenues en sortie du multiplieur 12, sont toujours comprises dans un domaine de fréquences délimité par les valeurs de la fréquence d'émission minimale $F1$ et de la fréquence d'émission maximale $F0$.

En particulier, lorsqu'une valeur numérique d'amplitude d'enveloppe $Se(i)$ est égale à la valeur de l'amplitude seuil s, la valeur numérique de modulation $S1(i)$, calculée par le limiteur 10 à l'aide de la formule A3 de l'annexe, vaut 1 ce qui entraîne que la valeur de la fréquence d'émission modulée correspondante $F(i)$ prend la valeur de la fréquence d'émission maximale $F0$. Pour une valeur numérique d'amplitude d'enveloppe filtrée $S\in(i)$ inférieure à la valeur d'amplitude seuil $s$, la valeur numérique de modulation $S1(i)$ correspondante est supérieure à la valeur 1, ce qui implique que la valeur numérique de la fréquence d'émission modulée $F(i)$ prend la valeur de la fréquence d'émission maximale $F0$, laquelle est inaudible pour le sujet puisque choisie supérieure à la limite ultrasonique comme décrit plus haut.

Ainsi, les valeurs de fréquences d'émission modulées $F(i)$ ne rendent pas compte de variations d'amplitude de l'enveloppe du signal audiofréquence analogique d'entrée, pour des amplitudes inférieures à la valeur d'amplitude seuil s. La valeur seuil $s$ représente donc une valeur d'amplitude sonore au-dessous de laquelle on considère que le signal audiofréquence analogique d'entrée ne représente pas d'informations dignes d'être rendues au moyen d'une modulation de fréquence. On peut considérer que le choix de la valeur d'amplitude seuil $s$ fixe le niveau de détail désiré dans l'application du dispositif selon l'invention. En effet, plus la valeur d'amplitude seuil s est élevée moins la modulation rendra compte de détails dans le signal audiofréquence analogique d'entrée.

De préférence, la valeur d'amplitude seuil *s* est prise supérieure à 0,01 en considérant que cette valeur correspond à la valeur limite séparant le bruit du langage.

L'ensemble constitué du détecteur d'enveloppe 6, du limiteur 10 et du multiplieur 12 associe ainsi à une gamme d'amplitude de l'enveloppe du signal audiofréquence analogique d'entrée, une gamme de fréquences d'emission en correspondance.

Le synthétiseur 14 élabore pour chaque valeur numérique de fréquence d'émission *F(i)* un signal numérique d'amplitude constante choisie et réglable, et dont la fréquence fondamentale correspond à la valeur numérique de la fréquence d'émission *F(i)*. Pour chaque fréquence fondamentale définie précédemment, le synthétiseur 14 détermine le nombre d'harmoniques qu'il peut générer compte tenu de la limite supérieure en fréquence imposée par la fréquence d'échantillonnage (théorème de Shannon), laquelle est l'inverse de la période d'échantillonnage $\Delta T$. Le synthétiseur 14 élabore les harmoniques précédemment déterminées en sommant les séries de Fourrier d'un signal carré, en appliquant à chaque harmonique de rang n, le coefficient 1/n lorsque n est pair et le coefficient -1/n lorsque n est impaire.

Bien que l'amplitude du signal numérique élaboré par le synthétiseur 14 soit constante et indépendante de la fréquence d'émission modulée *F(i)*, l'amplitude perçue par le sujet est, elle, dépendante de la fréquence d'émission modulée *F(i)* à cause de la forme du spectre audible humain. En particulier, plus la fréquence d'émission modulée *F(i)* est élevée, plus l'amplitude perçue par le sujet est faible.

Le signal audio numérique obtenu en sortie du synthétiseur 14 est ensuite appliqué à l'entrée d'un convertisseur numérique-analogique qui élabore, à partir dudit signal audio numérique, un signal analogique de sortie, qui peut être soumis au patient à traiter par l'intermédiaire d'un casque ou d'enceintes. Avantageusement, le convertisseur numérique-analogique peut être une carte son insérée dans un ordinateur personnel. Dans un mode de réalisation préféré, la fonction de convertisseur numérique-analogique est réalisée par la même carte son que celle qui réalise la fonction de convertisseur analogique-numérique 2, précédemment décrite.

Le signal analogique de sortie est perçu par le patient bien distinct du signal audiofréquence analogique d'entrée car de fondamentale largement supérieure à la fréquence de la voix, comme indiqué plus haut. Ceci est important lorsque l'on décide d'associer le signal audiofréquence analogique d'entrée et le signal analogique de sortie, comme décrit plus loin. Dans ce cas, le choix des fréquences de coupure FC1 et FC2 du filtre passe bande 4 détermine la gamme de fréquences disponible pour le signal analogique de sortie.

Le signal analogique de sortie étant élaboré avec quelques unes de ses harmoniques, il est plus agréable à entendre pour le patient à traiter.

Chez l'Homme, la "conscience phonologique" repose en particulier sur des automatismes, et sur leur intégration cognitive (sémantique et syntaxique). Le traitement de patients souffrant de troubles auditivo-verbaux, c'est-à-dire des personnes chez qui ces automatismes ont été mal acquis, consiste essentiellement en une rééducation à l'aide du dispositif selon l'invention permettant d'acquérir de nouveau lesdits automatismes.

Dans une première phase de rééducation, on fait entendre au patient un son paramétrique seul obtenu en soumettant à l'entrée du dispositif selon l'invention des échantillons sonores constitués de voix ou de musique. Ces échantillons sonores peuvent provenir du thérapeute par l'intermédiaire d'un microphone relié à l'entrée E du dispositif selon l'invention. Dans un mode de réalisation préféré, les échantillons sonores proviennent d'enregistrements stockés dans une mémoire d'un ordinateur et fournis au dispositif selon l'invention par l'intermédiaire d'un magnétophone logiciel capable de jouer des sons, notamment au format de compression MP3. Dans ce mode de réalisation particulier, l'ordinateur comprend une carte son intégrant les fonctions de codeur analogique-numérique et de convertisseur numérique-analogique. Dans cette première phase de rééducation, il peut être intéressant d'utiliser comme entrée du dispositif selon l'invention de la musique afin d'habituer le sujet au son paramétrique.

Dans une seconde phase du traitement, on fait entendre au patient un son paramétrique seul puis le son naturel d'origine, tel que fourni à l'entrée du dispositif selon l'invention. Le son naturel d'origine est un segment de message (une phrase très courte) d'abord découpé par phonèmes, puis dans un second temps par syllabes et pour finir par éléments syntaxiques.

Une troisième phase du traitement consiste à segmenter le son paramétrique en faisant alterner des temps sourds (silence) et des temps sonores (son paramétrique). Selon une première méthode, les durées des temps sont fixées, les temps sourds étant généralement plus longs (0,5 s par exemple) que les temps sonores (0,3 s par exemple). Il est possible de souligner le basculement d'un temps sourd à un temps sonore en faisant entendre un signal sonore caractéristique (typiquement un "bip"). Un avantage de la présente invention est de baser l'alternance sur le son émis par le patient. On bascule d'un temps sonore à un temps sourd lorsqu'un paramètre atteint une valeur choisie. Par exemple, il est possible de basculer vers un temps sourd lorsque la puissance sonore, respectivement la fréquence, du son émis par le patient atteint un niveau choisi. Un autre paramètre peut être lié au rythme de diction : par exemple, si une voyelle est prononcée trop longtemps, on bascule vers un temps sourd.

La quatrième phase de rééducation est dite active, car le sujet répète ce qu'il entend. On part de mots pré-enregistrés en clair, avec des intervalles permettant au patient de répéter chaque mot. Les mots pré-enregistrés sont soumis au dispositif selon l'invention ainsi que les mots répétés. Dans le casque, le sujet reçoit le signal paramétrique et le signal naturel. Il est intéressant de travailler en stéréophonie, en appliquant à l'oreille gauche le signal paramétrique et à l'oreille droite le signal naturel, ce qui correspond à la latéralisation fonctionnelle des hémisphères cérébraux (écoute dichotique).

Dans une cinquième phase de rééducation, le sujet répète ce qu'il entend d'une part et lit ce qu'il répète d'autre part.

Dans une sixième phase est un mélange de lecture guidée suivant la méthode décrite ci-dessus, et de lecture libre avec prononciation du texte lu, et audition du texte lu, sous forme d'une mélange de signal paramétrique et de signal naturel.

Enfin, dans une septième phase, le patient écrit ce qu'il entend et on lui laisse du temps pour se relire et se corriger.

Progressivement, on supprime complètement le signal paramétrique.

Dans un mode de réalisation préféré, la carte son décrite plus haut intègre une fonction de mélangeur, non décrite ici car connue de l'homme du métier, qui permet d'obtenir en sortie un mélange entre le signal audiofréquence analogique d'entrée et le signal analogique de sortie mais également de faire du signal audiofréquence analogique d'entrée une combinaison de signaux provenant d'une source de lecture, du thérapeute et du sujet.

L'élaboration du signal paramétrique de sortie en numérique offre également une plus grande souplesse d'utilisation du dispositif selon l'invention ainsi qu'une plus grande précision dans le traitement. Ceci permet également de tirer parti des supports numériques actuels comme le CD mais aussi des supports informatiques comme les mémoires mortes et du format de compression MP3 afin de constituer une base de données d'échantillons sonores.

Le dispositif selon l'invention a été ici décrit mis en oeuvre dans le traitement des troubles auditivo-verbaux mais il peut également servir de base à une méthode d'apprentissage des langues étrangères. De plus, le dispositif selon l'invention peut être adapté pour traiter des troubles auditivo-verbaux dans d'autres langues que la langue française.

L'invention ne se limite pas aux modes de réalisation décrits ci-avant, seulement à titre d'exemple, mais elle englobe toutes les variantes que pourra envisager l'homme de l'art.

Annexe

$$\text{A1.} \quad Se(i) = \max\left\{\left|S(i)\right|, \left|Kd \times Se(i-1)\right|\right\}$$

$$\text{A2.} \quad Kd = \exp\left[-\frac{\Delta T}{Td}\right]$$

$$\text{A3.} \quad Sl(i) = \left(\frac{S\varepsilon(i)}{s}\right)^{Kl}$$

$$\text{A4.} \quad Kl = -\frac{\ln\left(\frac{F1}{F0}\right)}{\ln(s)}$$

$$\text{A5.} \quad F(i) = \min\big(F0 \times Sl(i), F0\big)$$

**Revendications**

1.  Dispositif de traitement numérique de signaux audio, comprenant :

    - une entrée de signal audiofréquence analogique (E),
    - un codeur analogique-numérique (2) disposé en aval de l'entrée pour refléter le signal audiofréquence analogique (E) par une première suite de valeurs numériques,
    - un détecteur d'enveloppe (6) disposé en aval du codeur analogique-numérique (2) pour établir à partir de la première suite de valeurs numériques une seconde suite de valeurs numériques reflétant l'enveloppe du signal audiofréquence analogique (E),
    - un limiteur-multiplieur numérique (10, 12) disposé en aval du détecteur d'enveloppe (6) pour établir (10) selon une première loi choisie une troisième suite de valeurs numériques de modulation à partir de la seconde suite de valeurs numériques, cette troisième suite de valeurs numériques de modulation étant transformée en une suite de valeurs de fréquences d'émission, lesquelles reflètent une modulation qui descend à partir d'une fréquence maximum (F0) réglable pour être proche de la plus haute fréquence audible, pour aller jusqu'à un minimum (F1) réglable au dessus de la fréquence fondamentale d'une voix humaine, tandis que la fréquence maximum est prise pour une amplitude égale à un seuil (s) supérieur à la limite bruit/langage,
    - un synthétiseur (14) disposé en aval du limiteur-multiplieur pour établir un signal audio numérique à partir de ladite suite de valeurs de fréquences d'émission, et
    - un convertisseur numérique-analogique (16) disposé en aval du synthétiseur pour produire un signal analogique de sortie à partir du signal audio numérique, le signal analogique étant un signal paramétrique destiné en particulier au traitement de sujets atteints de troubles audiophonatoires.

2.  Dispositif de traitement numérique selon la revendication 1, **caractérisé en ce que** la première loi est apte à établir la troisième suite de valeurs numériques pour que les valeurs de fréquences d'émission modulées soient comprises entre la valeur de fréquence minimum et la valeur de fréquence maximum choisies.

3.  Dispositif de traitement numérique selon la revendication 2, **caractérisé en ce que** ladite première loi prend en compte les valeurs de la seconde suite de valeurs numériques et la valeur d'amplitude seuil choisie.

4.  Dispositif de traitement numérique selon la revendication 3, **caractérisé en ce que** ladite première loi est fonction :

    - de la valeur d'amplitude seuil,
    - du logarithme de la valeur de fréquence minimum,
    - et du logarithme de la valeur de fréquence maximum.

5.  Dispositif de traitement numérique selon la revendication 4, **caractérisé en ce que** ladite première loi calcule chaque valeur de la troisième suite de valeurs numériques comme étant le rapport d'une valeur de la seconde suite de valeurs numériques sur la valeur d'amplitude seuil élevé à une puissance valant le rapport du logarithme du rapport des première et seconde valeurs de fréquence, sur une valeur d'amplitude seuil.

6.  Dispositif de traitement numérique selon l'une des revendications 2 à 5, **caractérisé en ce que** le multiplieur réalise le produit des valeurs de la troisième suite de valeurs numériques et de ladite valeur de fréquence maximum.

7.  Dispositif de traitement numérique selon l'une des revendications 2 à 6, **caractérisé en ce que** ladite valeur de fréquence maximum est choisie voisine de la plus haute fréquence audible par le sujet.

8.  Dispositif de traitement numérique selon l'une des revendications précédentes, **caractérisé en ce que** pour chaque valeur de la suite de valeurs de fréquences d'émission, le synthétiseur (14) élabore un signal de fréquence fondamentale correspondante avec au moins une harmonique.

9.  Dispositif de traitement numérique selon l'une des revendications précédentes, **caractérisé en ce qu'**il comprend un filtre passe-bas numérique (8) entre le détecteur d'enveloppe (6) et le limiteur numérique (10).

**Claims**

1. Apparatus for digital processing of audio signals, comprising:

   - an analogue audiofrequency signal input (E)
   - an analogue-digital encoder (2), arranged downstream of the input to reflect the analogue audiofrequency signal (E) by a first sequence of digital values,
   - an envelope detector (6), arranged downstream of the analogue-digital encoder to establish, from the first sequence of digital values, a second sequence of digital values reflecting the envelope of the audiofrequency input signal (E),
   - a digital limiter-multiplier (10, 12), arranged downstream of the envelope detector (6) to establish, according to a first chosen law, a third sequence of modulated digital values, from the second sequence of digital values, this third sequence of modulated digital values being transformed in a sequence of emission frequency values, which reflect a modulation that decreases from an adjustable frequency maximum (F0) being close to the highest audible frequency, until an adjustable minimum (F1) being above the fundamental frequency of a human voice, whereas the maximum frequency is taken as an amplitude equal to an adjustable threshold (s) greater than the noise/language limit,
   - a synthesizer (14), arranged downstream of the limiter-multiplier to establish a digital audio signal from the sequence of emission frequency values, and
   - a digital-to-analogue converter (16), arranged downstream of the synthesizer to produce an analogue output signal from the digital audio signal, the analogue signal being a parametric signal dedicated in particular to a treatment of subjects suffering from audio-phonatory disorders.

2. Digital processing apparatus according to claim 1, **characterised in that** the first law is adapted to establish the third sequence of digital values so that the modulated emission frequency values are contained between the selected minimum frequency value and the selected maximum frequency value.

3. Digital processing apparatus according to claim 2, **characterised in that** said first law takes into account the values of the second sequence of digital values and a chosen threshold amplitude value.

4. Digital processing apparatus according to claim 3, **characterised in that** said first law is a function of:

   - a threshold amplitude value,
   - the logarithm of the frequency minimum value,
   - and the logarithm of the frequency maximum value.

5. Digital processing apparatus according to claim 4, **characterised in that** said first law calculates each value of the third sequence of digital values as being the ratio of a value of the second sequence of digital values over the threshold amplitude value raised to a power equal to the ratio of the logarithm of the ratio of the first and second frequency values, over a threshold amplitude value.

6. Digital processing apparatus according to one of claims 2 to 5, **characterised in that** the multiplier provides the product of the values of the third sequence of digital values and said upper frequency value.

7. Digital processing apparatus according to one of claims 2 to 6, **characterised in that** said frequency maximum value is selected to be close to the highest frequency audible by the subject.

8. Digital processing apparatus according to one of the preceding claims, **characterised in that** for each value of the sequence of emission frequency values, the synthesiser (14) develops a corresponding fundamental frequency signal with at least one harmonic.

9. Digital processing apparatus according to one of the preceding claims, **characterised in that** it comprises a digital low pass filter (8) between the envelope detector (6) and the digital limiter (10).

**EP 1 697 913 B1**

**Patentansprüche**

1. Vorrichtung zur digitalen Bearbeitung von Audiosignalen, mit:

   - einem analogen Audiofrequenzsignal-Eingang (E),
   - einem analog-digitalen Kodierer (2), der nach dem Eingang angeordnet ist, um das analoge Audiofrequenzsignal (E) durch eine erste Folge von digitalen Werten zu widerspiegeln,
   - einem Hüllkurvengleichrichter (6), der nach dem analog-digitalen Kodierer (2) angeordnet ist, um ausgehend von der ersten Folge von digitalen Werten eine zweite Folge von digitalen Werten zu erstellen, die die Hüllkurve des analogen Audiofrequenzsignals (E) widerspiegeln,
   - einem digitalen Begrenzer-Vervielfacher (10,12), der nach dem Hüllkurvengleichrichter (6) angeordnet ist, um gemäß einem ersten gewählten Gesetz eine dritte Folge von digitalen Modulationswerten, ausgehend von der zweiten Folge von digitalen Werten, zu erstellen (10), wobei diese dritte Folge von digitalen Modulationswerten in eine Folge von Emissionsfrequenzwerten transformiert wird, welche eine Modulation widerspiegeln, die, ausgehend von einer Maximalfrequenz (F0), die einstellbar ist, um in der Nähe der höchsten hörbaren Frequenz zu sein, absteigt, um bis zu einem Minimum (F1) zu gehen, das oberhalb der Basisfrequenz einer menschlichen Stimme einstellbar ist, während die Maximalfrequenz für eine Amplitude gleich einer Schwelle (s) größer als die Grenze Geräusch/Sprache genommen wird,
   - einem Frequenzgenerator (14), der hinter dem Begrenzer-Vervielfacher angeordnet ist, um ein digitales Audiosignal ausgehend von der Folge von Emissionsfrequenzwerten zu erstellen, und
   - einem Digital-analog-Wandler (16), der hinter dem Frequenzgenerator angeordnet ist, um ein analoges Ausgangssignal ausgehend von dem digitalen Audiosignal zu erstellen, wobei das analoge Signal ein parametrisches Signal ist, das insbesondere zur Behandlung von Subjekten, welche von audiophonatorischen Störungen betroffen sind, bestimmt ist.

2. Vorrichtung zur digitalen Bearbeitung nach Anspruch 1, **dadurch gekennzeichnet, dass** das erste Gesetz in der Lage ist, die dritte Folge von digitalen Werten zu erstellen, damit die modulierten Emissionsfrequenzwerte zwischen dem Minimalfrequenzwert und dem gewählten Maximalfrequenzwert liegen.

3. Vorrichtung zur digitalen Bearbeitung nach Anspruch 2, **dadurch gekennzeichnet, dass** das erste Gesetz die Werte der zweiten Folge von digitalen Werten und den gewählten Schwellenamplitudenwert berücksichtigt.

4. Vorrichtung zur digitalen Bearbeitung nach Anspruch 3, **dadurch gekennzeichnet, dass** das erste Gesetz abhängig ist von:

   - dem Schwellenamplitudenwert,
   - dem Logarithmus des minimalen Frequenzwerts,
   - und dem Logarithmus des maximalen Frequenzwerts.

5. Vorrichtung zur digitalen Bearbeitung nach Anspruch 4, **dadurch gekennzeichnet, dass** das erste Gesetz einen jeden Wert der dritten Folge von digitalen Werten berechnet, als das Verhältnis eines Wertes der zweiten Folge von digitalen Werten zu dem Schwellenamplitudenwert hoch einem Potenzwert der dem Verhältnis des Logarithmuses des Verhältnisses der ersten und zweiten Frequenzwerte zu einem Schwellenamplitudenwert entspricht.

6. Vorrichtung zur digitalen Bearbeitung nach einem der Ansprüche 2 bis 5, **dadurch gekennzeichnet, dass** der Vervielfacher das Produkt der Werte der dritten Folge der digitalen Werte und des maximalen Frequenzwerts erzeugt.

7. Vorrichtung zur digitalen Bearbeitung nach einem der Ansprüche 2 bis 6, **dadurch gekennzeichnet, dass** der maximale Frequenzwert in der Nähe der höchsten von dem Subjekt hörbaren Frequenz gewählt wird.

8. Vorrichtung zur digitalen Bearbeitung nach einem der vorhergehenden Ansprüche, **dadurch gekennzeichnet, dass** für einen jeden Wert der Folge der Emissionsfrequenzwerte, der Frequenzgenerator (14) ein fundamentales Frequenzsignal entsprechend wenigstens eines Obertons erstellt.

9. Vorrichtung zur digitalen Bearbeitung nach einem der vorhergehenden Ansprüche, **dadurch gekennzeichnet, dass** sie einen digitalen Tiefpassfilter (8) zwischen den Hüllkurvengleichrichter (6) und dem Digitalbegrenzer (10) aufweist.

FIG.1

FIG.2

EP 1 697 913 B1

**FIG.1 labels:** MC1, TM1, AM1, CE, 1, CONVERTISSEUR AUDIOFREQUENCES, CS, AP, AMPLI B.F 2 VOIES + EQUILIBRAGE, T1, T2, M, M1, E, S, TM2, MC2

**FIG.2 labels:** E, 2 ADC, 4, 6, 8, 3, S, DAC 16, SYNTH. 14, MULT. 12, 10

**EP 1 697 913 B1**

**RÉFÉRENCES CITÉES DANS LA DESCRIPTION**

**Documents brevets cités dans la description**

- FR 2686442 A

- US 5573403 A